# EUROPEAN PATENT APPLICATION

(11) **EP 4 248 734 A1**
(43) Date of publication of application: **27.09.2023**
(21) Application number: 21894092.2
(22) Date of filing: 16.11.2021
(51) Int. Cl.: A01G 9/12, A01G 17/04, B65H 75/40

(54) **DEVICE FOR TUTORING PLANTS**

(30) Priority: 17.11.2020 ES 202031156
(71) Applicant: GP Tecnic SL, 04738 Almeria (ES)
(72) Inventor: GRANADOS PUGA, German, 04738 ALMERIA (ES)
(74) Representative: JD&P Patent Attorneys Joanna Dargiewicz & Partners
(86) International application number: PCT/ES2021/070826
(87) International publication number: WO 2022/106739

(57) **Abstract**

The invention consists of a reel (1) which is attached to a fixation support (2) in order to fasten the corresponding staking wire. The cord to be fixed by its loose end to the plant to be hung is wound on the reel (1), in order for the reel to be attached and moved both axially and in rotation on a pin (8) provided at the base of the support (2). The base of the support includes a pair of perpendicular arms (10) that determine the locking mechanism for the reel (1), the base of which includes two diametrical and perpendicular recesses or grooves (7) that can be fitted and unfitted on the arms (10) of the base of the support itself (2). The reel will therefore always be in the locked position, which can be released by pressing the reel upwards.

## Description

### PURPOSE OF THE INVENTION

This invention relates to a device for plant staking, specifically for the staking of tomato plants, without excluding other uses that require similar functionalities.

The purpose of the invention is to provide a device for the regulation of the height of the tomato plant in relation to the wire to which said plant is attached by way of a cord that forms part of the device itself.

The purpose of the invention is therefore to provide a means by which the length of the cord that connects the tomato plant to the wire upon which it is supported can be easily adjusted, for example, in order to facilitate the harvesting of the crop or to adjust the height in accordance with the growth of the plant itself.

### BACKGROUND OF THE INVENTION

Within the scope of the practical application of the invention, and as is already common knowledge, in order to optimise tomato production as opposed to being left to grow naturally, with the plant extending at ground level, these plants are usually connected to horizontal wires by means of strings or cords enabling them to adopt a vertical position, improving the production conditions of the crop, in addition to keeping them away from the ground, potentially humid conditions and insects. This also optimises the available space.

In any case, this staking technique is undertaken by means of cords or strings that must adapt to the changeable conditions as a result of the growth of the plant itself. They can reach considerable heights and, of course, not all the tomatoes are picked at the same time, as they are picked depending on their maturity. The plants must therefore be unhooked constantly in order to access the ripe crops located higher up on the plant, prior to being hung up once again.

Thus, this staking process is undertaken by tying and untying the cords until they are adapted to the length required at any given time, which is an arduous and laborious task, especially in the case of large areas where this process must be repeated countless times.

### DESCRIPTION OF THE INVENTION

The plant staking device in question offers a satisfactory response to the aforementioned issue, based on a simple yet effective solution, enabling the convenient, fast and simple regulation of the extension of the cord that connects the plant to the horizontal wire upon which it is hung, without the need for complex manipulation.

For this purpose, the invention device consists of two parts that are linked together manually, namely a reel and a fixation support in order to attach them to the horizontal staking wire.

More specifically, the reel has a hollow cylindrical tubular shape. This enables the cord to be fixed by its loose end to the plant to be hung by said wire to be wound on its external side, a reel which, as mentioned prior, has a hollow interior, defining the means of rotation for the reel.

On the other hand, the support consists of a base with a vertical cylindrical pin upon which the reel is intended to be attached, a base consisting of a pair of perpendicular arms, with vertical arms emerging from the ends, forming a type of open wraparound for the reel, two of which are extended above the reel, ending in two hanging hooks on the corresponding wire.

This ensures a reel that can rotate in relation to the wire fixing support and thus develop or wind the cord associated with said reel in order to regulate its length and, consequently, the height of the plant associated with this cord.

In keeping with another of the features of the invention, the reel can be both locked and unlocked in relation to the support to which it is connected by way of rotation. For this purpose, the reel ends at the bottom with an annular base, with diametrical recesses or grooves, with a width and depth in accordance with the arms of the base of the wire. Therefore, the relative rotation between elements and with the effect of gravity or tension of the cord, during the rotation of the reel, the grooves of the lower base of the reel will coincide with the arms of the base and will fit into them, preventing the relative movement between both elements. The cord itself is therefore perfectly stabilised so that as the reel can be moved axially on the pin emerging from the base of the support, the grower can press upwards on the base of the reel to release it and enable it to rotate freely to adjust the length of the cord wound onto it. Thus, when the correct length is reached, the reel will automatically lock when the grooves of its lower base coincide with the arms of the lower base of the support when it is no longer being pressed upwards.

This therefore facilitates the creation of a mechanism that is very easy to regulate, in addition to being both affordable and reusable.

### DESCRIPTION OF THE DRAWINGS

To complement the following description and in order to facilitate a better understanding of the characteristics of the invention, in accordance with a preferred example of practical realisation, a series of drawings in which the following have been represented in a way that is illustrative and not limiting, is attached as an integral part of this description:
Figure 1. - Shows a perspective view of the reel that forms part of a device for staking plants, made in accordance with the purpose of this invention.
Figure 2. - Shows a perspective view of the hanging support of the device to the horizontal wire to which the reel shown in figure 1 is attached.
Figure 3. - Shows a perspective view of the assembled invention device, in an unlocked and free rotation position of the reel in relation to the hanging support.

### PREFERRED REALISATION OF THE INVENTION

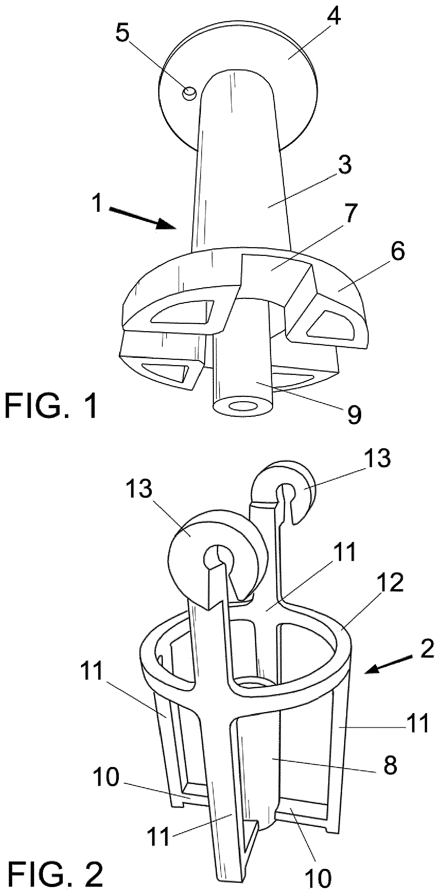

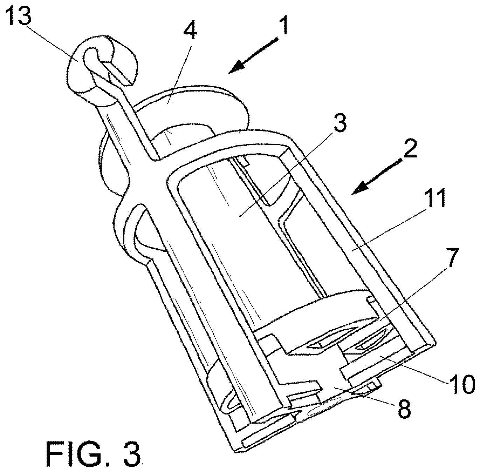

In view of the figures shown above, it can be observed that the device for plant staking consists of a reel (1), shown in figure 1, and a support (2) for attachment to the horizontal staking wire, shown in figure 2, which are connected to each other, as can be observed in figure 3.

Going back to figure 1, the reel consists of a hollow cylindrical tubular body (3), which includes a disc-shaped upper base (4) with a hole (5), in order to stabilise the staking wire, which is wound externally on the surface of the cylindrical tubular body (3). The lower extremity of this tubular body ends in an annular base (6) in which two diametrical and perpendicular recesses or grooves (7) are established on the lower side.

In accordance with figure 2, the support (2) consists of a base with a hollow cylindrical and vertical pin (8), upon which the reel (1) is intended to be inserted. The cylindrical tubular body (3) has an inner shaft (9) which is attached to the middle of the pin (8).

The base of the support (2) consists of two perpendicular arms (10), from the ends of which two vertical struts (11) emerge, creating a form of open wraparound for the reel, which is reinforced by a ring (12) attached to all the struts (11), enabling two of said struts to be extended above the reel and ending in hooks (13) used to hang on the corresponding wire.

From this structure, and as can be observed in figure 3, as the reel (1) can be displaced axially on the pin (8) of the base of the support (2), when pressing upwards on the base of the reel, it will be released from the arms (10) that lock it into place, enabling the reel to rotate and consequently regulating the cord attached to it. When the reel is released, it will tend to be locked by both the downward tension of the cord and by gravity, with the arms (10) of the support being locked into the grooves (7) of the reel.

## Claims

1. A device for plant staking, consisting of a reel (1) and a fixation support (2) to the corresponding wire, a reel (1) made up of a hollow cylindrical tubular piece, upon the external side of which the cord is wound in order to be fixed to the plant to be hung by the free extremity, and which can be displaced both axially and in rotation on a vertical pin (8) provided on the base of the support (2). This base consists of a pair of perpendicular arms (10), from the ends of which two vertical struts emerge (11), determining a form of open wraparound for the reel, two of which extend above the reel itself and end in hooks (13) used to hang the support (2) on the corresponding wire. These are particular, as the reel (1) ends in an annular base (6) on the lower side of which there are two diametrical and perpendicular recesses or grooves (7) that can be fitted into and removed from the arms (10) of the base of the support (2). The pin (8) that emerges from the base of the support (2) is hollow, and inside the tubular body of the reel (1) there is an inner shaft (9) that moves in the middle of the pin (8).

2. The device for staking plants, according to claim 1, **characterised by** a reel (1) finished off at the top with a disc-shaped upper base (4) with a hole (5) for stabilising the staking cord.

3. The device for plant staking, according to claim 1, **characterised by** the casing that constitutes the support (2) for the reel (1), including a reinforcement ring (12) that joins the struts (11).
